# EUROPEAN PATENT SPECIFICATION

(11) **EP 1 569 486 B1**
(45) Date of publication and mention of the grant of the patent: **25.04.2007**
(21) Application number: 04251152.7
(22) Date of filing: 27.02.2004
(51) Int. Cl.: H04Q 7/38

(54) **Method, system, and device for provisioned talkgroup identifier discovery**
Verfahren, System und Gerät für die Ermittlung der Identifikatoren von bereitgestellten Sprechgruppen
Procédé, système et appareil pour la découverte des identificateurs des groupes d'appel approvisionnés

(43) Date of publication of application: 31.08.2005
(73) Proprietor: Research In Motion Limited, Waterloo, Ontario N2L 3W8 (CA)
(72) Inventor: Rao, Padakandla Krishna, Kanata, Ontario K2W 1C4 (CA); Yau, Sing Janus, Ottawa, Ontario K1Y 0N9 (CA)
(74) Representative: Rickard, David John

(56) References cited:
- EP-A- 1 330 138
- US-A1- 2003 083 086

## Description

The invention relates to wireless communication systems and more particularly to providing provisioned talkgroup identifier information to user devices.

In wireless communication systems which provide group call dispatch services, a user device may have a number of talkgroups which it may join in an active session. The specific predetermined talkgroups which the user device is permitted to join are known as the provisioned talkgroups of the user device. Each talkgroup is identified by a talkgroup identifier or talkgroup ID which often takes the form of an index. In order for a user using the user device to join a talkgroup, the user typically must input the particular talkgroup identifier of the provisioned talkgroup the user wants the device to join.

An example of a system providing group call dispatch services is the iDEN^{™} system of Motorola^{™} which provides dispatch services including walkie-talkie-like functionality such as push-to-talk^{™} (PTT^{™}). When referred to herein, walkie-talkie functionality and half-duplex communication functionality which at any one time is capable of transmitting voice communication from a talking or transmitting party's device to a listening or receiving party's device, but cannot simultaneously transmit voice communication from the receiving party's device to the talking party's device, while the talking party's device is transmitting voice to the receiving party's device.

European Patent 1 330 138 A2 published July 23, 2003 discloses a system for provisioning geographically specific talkgroups. When a mobile station moves within the coverage area of a cell, a base station serving that cell automatically informs the mobile station of a set of available geographic or location-specific talkgroup identification codes that are only valid within that specified location area. When a mobile station moves to a new cell, the system will again need to inform the mobile station of the available talkgroup identification codes.

U.S. Patent Application No. US2003/0083086 A1, published May 1, 2003 relates to dynamically creating talkgroups in a communications system. A new dynamic group is created by a user who defines a group definition message in his subscriber station. This group definition message uniquely identifies the new group in the system, and can be distributed to the intended group members using the usual messaging facilities available in the specific communications system. The recipients of the group definition message can store the message in their subscriber stations for subsequent use. Thus, group creation and membership management are handled at user level without interacting with the system. The role of the system is restricted to establishing a means for communication in the group whenever there are users who have activated the group for communication.

U.S. Patent No. 5428823 discloses a communication system in which a communication unit first selects a single talk group, then requests information concerning the single talk group from a communications resources allocator, receives the information concerning the selected single talk group, namely the talkgroup ID, temporarily stores the information in the communication unit and then uses said information to execute a system service.

### GENERAL

The present invention provides a method, system, and user device for provisioned talkgroup identifier discovery in a dispatch or similar network, in which a user is provided with a list of talkgroups provisioned for the user device. In some embodiments a new request message sent from the user device is implemented to effect a response from the network providing the information. In other embodiments, the mobile unit attempts to join every group to test which groups are provisioned for it.

According to one broad aspect, the invention provides a user device capable of walkie-talkie-like functionality adapted to participate in half-duplex calls through a network delivering walkie-talkie-like communications in which at any one time the network is capable of transmitting voice communication from a talking or transmitting party's device to a listening or receiving party's device, but cannot simultaneously transmit voice communication from the receiving party's device to the talking party's device while the talking party's device is transmitting voice to the receiving party's device, the user device being capable of receiving from the network talkgroup identifiers, characterized in that the user device is adapted to send a request to the network and is adapted to receive, in response to said request, all of the provisioned talk group identifiers of the user device comprising a respective talkgroup identifier for each talkgroup provisioned for the user device and is adapted to make information pertaining to said identifiers available to a user of the user device.

According to another broad aspect of the invention, the invention provides a user device capable of walkie-talkie-like functionality adapted to participate in half-duplex calls through a network delivering walkie-talkie-like communications in which at any one time the network is capable of transmitting voice communication from a talking or transmitting party's device to a listening or receiving party's device, but cannot simultaneously transmit voice communication from the receiving party's device to the talking party's device while the talking party's device is transmitting voice to the receiving party's device, the user device being capable of receiving from the network talkgroup identifiers, characterized in that the user device is adapted to obtain, in response to an input at the user device, all of the provisioned talkgroup identifiers of the user device comprising a respective talkgroup identifier for each talkgroup provisioned for the user device, said user device being adapted to obtain said talkgroup identifiers by transmitting respective messages in an attempt to join each of a plurality of talkgroups that could possibly be provisioned, and maintaining a record of which talkgroups were successfully joined; and is adapted to make information pertaining to said identifiers available to a user of the user device.

According to another broad aspect of the invention, the invention provides a system comprising: a network adapted to provide walkie-talkie-like communications services to user devices capable of walkie-talkie-like functionality in which at any one time the network is capable of transmitting voice communication from a talking or transmitting party's device to a listening or receiving party's device, but cannot simultaneously transmit voice communication from the receiving party's device to the talking party's device while the talking party's device is transmitting voice to the receiving party's device, the network being adapted to provide to a user device talkgroup identifiers, the system being characterized in that the user device is adapted to send a request to the network and is adapted to receive, in response to said request, all of the provisioned talk group identifiers of the user device comprising a respective talkgroup identifier for each talkgroup provisioned for the user device and is adapted to make information pertaining to said identifiers available to a user of the user device.

According to another broad aspect of the invention, the invention provides a system comprising: a network adapted to provide walkie-talkie-like communications services to user devices capable of walkie-talkie-like functionality in which at any one time the network is capable of transmitting voice communication from a talking or transmitting party's device to a listening or receiving party's device, but cannot simultaneously transmit voice communication from the receiving party's device to the talking party's device while the talking party's device is transmitting voice to the receiving party's device, the network being adapted to provide to a user device talkgroup identifiers, the system being characterized in that the user device is adapted to obtain, in response to an input at the user device, all of the provisioned talkgroup identifiers of the user device comprising a respective talkgroup identifier for each talkgroup provisioned for the user device, said user device being adapted to obtain said talkgroup identifiers by transmitting respective messages in an attempt to join each of a plurality of talkgroups that could possibly be provisioned, and maintaining a record of which talkgroups were successfully joined; and is adapted to make information pertaining to said identifiers available to a user of the user device.

Yet other broad aspects of the invention relate to methods of talkgroup discovery in a user device capable of walkie-talkie-like functionality.

Other aspects and features of the present invention will be apparent from the appended claims and will become apparent to those of ordinary skill in the art upon review of the following description of specific embodiments of the invention in conjunction with the accompanying figures.

### BRIEF DESCRIPTION OF THE DRAWINGS

Preferred embodiments of the invention will now be described with reference to the accompanying diagrams, in which:
FIG. 1 is a block diagram depicting elements of a communications system participating in provisioned talkgroup identifier discovery according to an embodiment of the invention;
FIG. 2 is a flow diagram illustrating the steps performed by the user device for provisioned talkgroup identifier discovery according to one network query based embodiment of the invention;
FIG. 3A is a block diagram representation of a datagram according to another embodiment of the invention for the provisioned talkgroup identifier request;
FIG. 3B is a block diagram representation of a datagram according to a further embodiment of the invention for the talkgroup identifier list update message;
FIG. 3C is a block diagram representation of a datagram according to another embodiment of the invention for the provisioned talkgroup identifier request;
FIG. 3D is a block diagram representation of a datagram according to a further embodiment of the invention for the talkgroup identifier list update message;
FIG. 4 is a flow diagram illustrating the steps performed by a network for provisioned talkgroup identifier discovery according to another network query based embodiment of the invention;
FIG. 5 is a flow diagram illustrating the steps performed by a user device for provisioned talkgroup identifier discovery according to a network registration based embodiment of the invention;
FIG. 6 is a block diagram representation of a datagram according to a further embodiment of the invention for the enhanced registration accept message;
FIG. 7 is a flow diagram illustrating the steps performed by a network for talkgroup identifier discovery according to another network registration based embodiment of the invention;
FIG. 8 is a flow diagram illustrating the steps performed by a user device for talkgroup identifier discovery according to one handheld based embodiment of the invention; and
FIG. 9 is a block diagram representation of a talkgroup test memory store according to another embodiment of the invention for organizing and storing success or failure of join group requests by the user device by talkgroup identifier.

### DESCRIPTION OF PREFERRED EMBODIMENTS

A user of a user device is normally informed of the user device's provisioned talkgroups and provided with a list of the talkgroup identifiers in the form of indices at the time of service activation (activation occurring once, when a user initially subscribes to the service). However, it may be the case that a user is unaware of or forgets the user device's provisioned talkgroups and the identifiers thereof.

A user who is unaware of or forgets after service activation the provisioned talkgroup identifiers of the user's device can call a carrier customer call center and ask for the list. Another opportunity to obtain the list is may be afforded a user who calls the carrier customer call center to subscribe to an additional group.

This may cause frustration and delays and is increasingly problematic as the number of provisioned talkgroups for the user device increases.

Embodiments of the present invention attempt to mitigate the inconvenience and/or inefficiency caused by a user only being informed of his/her provisioned talkgroup IDs during service activation or when he or she contacts a carrier customer care center. In accordance with the preferred embodiments discussed below, methods, systems and a novel user device, may be used to automatically provide a user of the user device a list of provisioned talkgroup IDs, or otherwise provide the user device with an identification of the provisioned talkgroup identifiers. In preferred embodiments of the invention, this information is retrieved over-the-air (OTA). While PTT^{™} networks and wireless devices are employed in the examples described below, more generally embodiments of the invention are applicable in the context of any networks and wireless devices participating in network delivered walkie-talkie-like communications, PTT being but one example. A network capable of delivering this will be referred to as a "dispatch network".

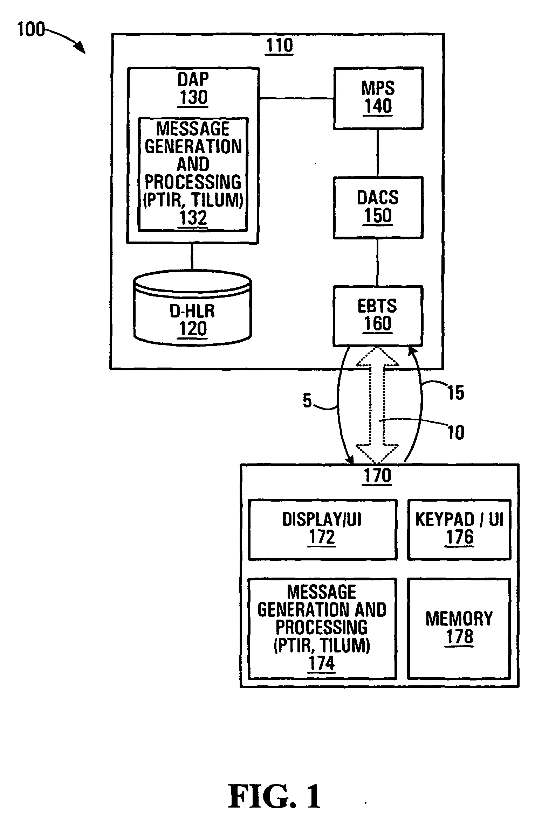

Referring to Figure 1, elements of a communications system participating in provisioned talkgroup identifier discovery according to an embodiment of the invention, will now be discussed.

A communications system, generally shown by reference numeral 100, is depicted in Figure 1, and is a modified iDEN^{™} system which includes a dispatch network 110 and user device 170 adapted in accordance with one possible implementation of the invention. In the implementation depicted in Figure 1, the user device 170 is a wireless user device. The dispatch network 110 provides dispatch services including push-to-talk (PTT^{™}) dispatch group calling services. A dispatch application processor (DAP) 130 is the processing entity responsible for the overall coordination and control of dispatch services in the iDEN^{™} system. The DAP 130 is coupled to a dispatch home location register (D-HLR) 120 which is a repository of data for dispatch calling identification and services. In some implementations the D-HLR 120 is resident on the DAP 130. The DAP 130 is coupled to a metro packet switch (MPS) 140 which is in turn coupled to a digital access cross connect switch (DACS) 150. The DACS 150 in turn is coupled to an enhanced base transceiver station (EBTS) 160. The EBTS 160 communicates with user devices over the air (OTA), and in the dispatch network, over outbound and inbound half-duplex voice communication channels 5 and 15 respectively, over a dedicated control channel (DCCH) 10, and over other existing channels (not shown). As will be discussed below, various embodiments of the invention use the DCCH 10 to send and receive messages associated with provisioned talkgroup identifier discovery. In the course of providing coordination and control of dispatch calls, the DAP 130 may retrieve information from the D-HLR 120 regarding the various services and or identifications including provisioned and selected talkgroups of a user device at any one time. In the course of communicating with the user device, the DAP 130 sends messages via the MPS 140, the DACS 150, and the EBTS 160 in order to interact with the user device 170.

According to an embodiment of the invention, the DAP 130 also has message generating and processing 132 which is adapted to respond to a PTIR (provisioned talkgroup identifier request) with a TILUM (talkgroup identifier list update message), both described in detail below. In a preferred embodiment, the message generation and processing 132 is implemented as a change to software already implemented on the DAP 130, but it may be implemented as separate software, hardware, firmware or a combination of these types of functionality. Figure 1 shows a very specific example of network functionality which provides dispatch communications services. The arrangement of Figure 1 is particularly suitable for iDEN^{™} applications. It is to be clearly understood that other network side implementations may be employed for delivering the talkgroup identifier discovery methods described herein. These other implementations may be specific to iDEN^{™} or to other dispatch service implementations. The dispatch service may of course include additional system components not shown in Figure 1.

In the illustrated example, the user device 170 has a display 172 or other user interface for presenting information to a user including but not limited to the talkgroup identifiers, and has a keypad 176 or other user interface for receiving input from the user including but not limited to a request for updating the talkgroup identifiers. Also shown is message generation and processing 174 which is responsible for generating the PTIR, and for processing a TILUM received in response to the request. In a preferred embodiment, the message generation and processing 174 is implemented as a change to software already implemented on the user device, but it may be implemented as separate software, hardware, firmware or a combination of these types of functionality. Finally, a memory 178 is shown in which is stored the list of talkgroup identifiers. Preferably, this is part of memory already implemented on the user device. Figure 1 shows a very specific implementation for a user device capable of implementing the talkgroup identifier discovery methods provided by embodiments of the invention. It is to be clearly understood that the particular arrangement of components of Figure 1 is only one example. The user device may of course include additional components not shown in Figure 1.

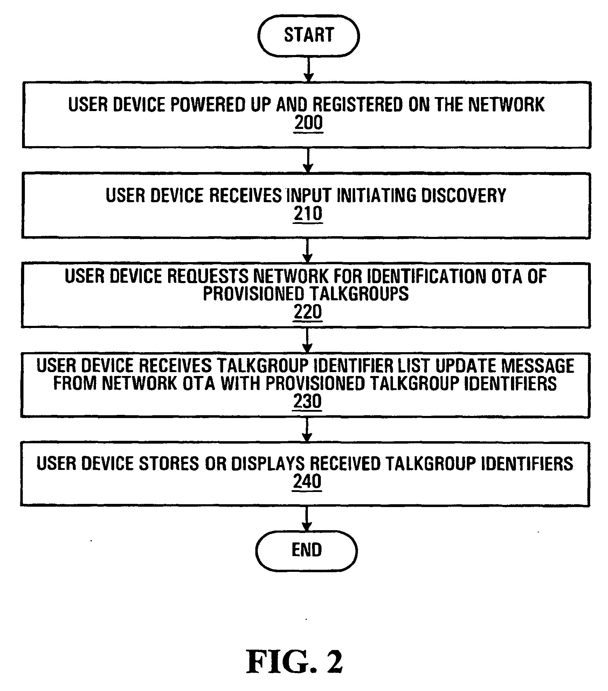

Referring now to Figure 2, the steps performed by the user device for provisioned talkgroup identifier discovery (PTID) according to one network query based embodiment of the invention, will now be discussed.

In this network query based embodiment, the communications system provides to the user device identifiers of the talkgroups in response to a query or request. In this embodiment the user device initiates PTID, however both the user device and the network are adapted to participate in PTID.

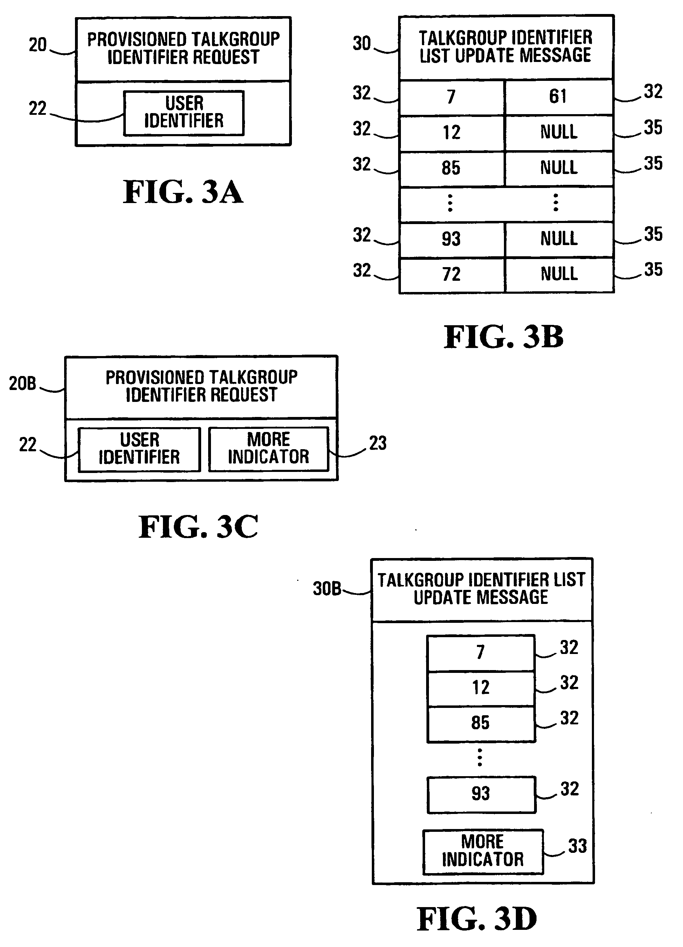

At step 200, a user device is powered up, and registered with the network. For example if the system is an IDEN^{™} system there is a standard procedure for doing this. In the case where a user has forgotten or lost the identification of the talkgroups the user's device has provisioned, the user can initiate the process of PTID by making a selection from the user device user interface which could include but is not limited to a menu selection, a press of a button, or otherwise any other input which is adapted to indicate to the user device that the user wishes to initiate PTID. This occurs at step 210 in which the user device receives input initiating discovery via a user interface. At step 220 the user device requests an identification over the air of provisioned talkgroups for example by transmitting a PTIR message. In an IDEN^{™} system this request might be processed by a DAP for example. The user device does this by sending a datagram or request message which may take a form similar to the example format depicted in Figure 3A described in more detail below. Preferably the datagram associated with the embodiment of Figure 2 includes an identification that the request message is a request for information listing all of the provisioned talkgroups of the user device, and also preferably includes an identification of the user device for helping the network retrieve the proper information. The next step the user device performs is the receipt of a response from the network, for example a TILUM, which may take a form similar to that of the example format depicted in Figure 3B described in more detail below. In a preferred embodiment, the message sent by the network to the user device in step 230 includes the list of talkgroup identifiers provisioned for the particular user device. Once the user device has received the identification of the provisioned talkgroups, the user device at step 240 may store or display the received talkgroup identifiers. In a preferred embodiment the user may be able to select whether or not the information is stored or displayed or both. Although there are many ways in which a number of identifiers may be displayed, according to a preferred embodiment the list is displayed on a visual user interface which could for example be an LCD display. More generally, information pertaining to the provisioned talkgroup identifiers is made available to a user of the device. For example, according to yet another preferred embodiment, the user device has a stored address book or alias list which may for example be provided by the user or a carrier, which may be used to store a name associated with each talkgroup identifier, which may often comprise a number. The name is preferably a more human friendly term which is descriptive of the talkgroup's function or members. Example talkgroup identifiers are discussed in more detail in association with other various embodiments of the invention.

In an additional embodiment, a dispatch network (for example, but not limited to that depicted in Figure 1) and particularly a user device (for example, but not limited to that depicted in Figure 1), are adapted to respectively support and perform the functions illustrated in the steps of the flow diagram of Figure 2.

Referring to Figure 3A, an example of a datagram which may be used for the provisioned talkgroup identifier request, will now be discussed. The particular request is generally indicated by 20. The message indicates inherently or explicitly to the network what is requested, and by the inclusion of a user identifier 22 (for example an urban fleet member id (UFMI) for iDEN^{™} systems), communicates to the network the particular user device which is requesting a list of provisioned talkgroups. According to some embodiments of the invention, the PTIR 20 is a new message defined within an existing communications system itself, like the iDEN^{™} system. In a preferred embodiment in which the system itself is modified, the PTIR 20 message could be a new layer 3 message adapted for a dedicated control channel (DCCH).
The PTIR message is sent over an implementation-specific control, messaging or traffic channel to effect delivery and a response to the request. In the event the channel is user device specific, it is not necessary to include a user identifier as the network can figure that out from the channel over which the request is received.

Referring to Figure 3B, an example of a datagram which may be used for a TILUM is generally indicated by 30. The message 30 indicates inherently or explicitly to the user device what the message is, and includes a list of all provisioned talkgroup identifiers 32 of the user device, provides to the user device the information it requested. In the structure illustrated, the TILUM 30 has a fixed size. This is achieved by padding the structure with NULL entries 35 until the fixed size is ready. In an embodiment implementing the fixed size, the number of possible values which can be stored in the TILUM 30 is equal to the maximum number of talkgroups that may be provisioned for a single user device. A fixed size TILUM does have the drawback of wasting bandwidth for NULL entries 35 in the list while at the same time avoiding processing which may be required for variable length TILUMs of other embodiments. In preferred embodiments, the TILUM is of variable size, including a field (not shown) to indicate the size or number of entries in the list, the entire structure being large enough to contain the list. In a variable size TILUM containing the same list as that shown in Figure 3B, the entries of NULLs 35 in Figure 3B would not be included and information indicating the size of the list would be included in an additional field. The particular structures used to effect useful transmission of the provisioned talkgroup identifiers will depend upon the capacities of the particular system in which it is implemented and the nature of the identities themselves. According to some embodiments of the invention, the TILUM 30 is a new message defined within an existing system, like the iDEN^{™} system. In a preferred embodiment in which the system itself is modified, the TILUM 30 message in the iDEN^{™} system could be a layer 3 message adapted for a dedicated control channel (DCCH).

The TILUM is sent over an implementation-specific control, messaging or traffic channel to effect delivery and receipt of the information requested by the user device.

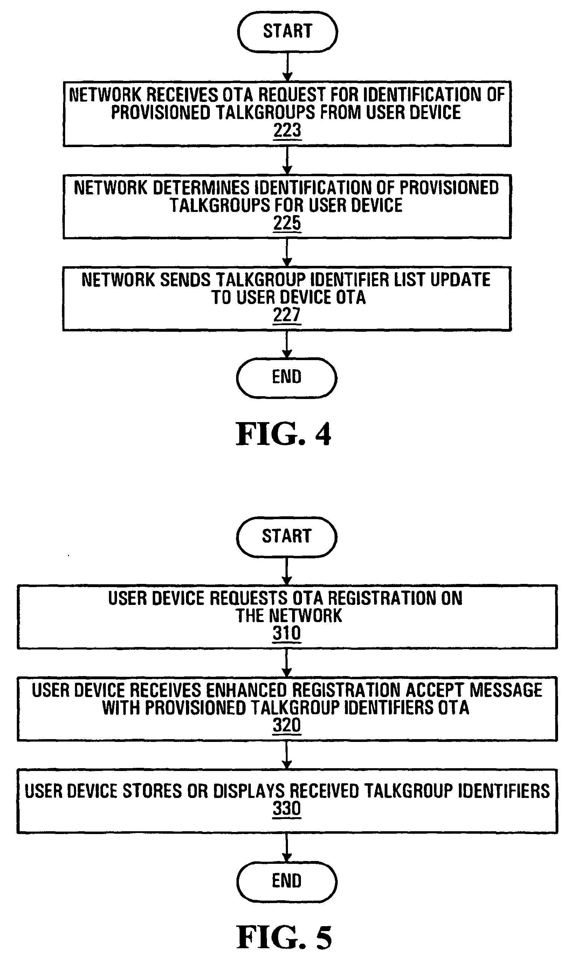

Referring to Figure 4, the steps performed by a dispatch network for provisioned talkgroup identifier discovery according to another network query based embodiment of the invention will now be discussed. In this embodiment, the communications system provides to the user device identifiers of the talkgroups in response to a request.

The method begins at step 223 with the network receiving over the air a request for the identification of provisioned talkgroups from the user device (i.e. the network receives the PTIR). In an iDEN^{™} implementation, this might for example be received and forwarded to the DAP. In step 225, the network determines the identification of the provisioned talkgroups for the user device which generated the request. For example, in an iDEN^{™} implementation such as shown in Figure 1, this may involve the DAP querying the D-HLR for this information. In step 227, the network sends the talkgroup identifier list update message to the user device over the air. This message might for example be generated by the DAP in iDEN^{™} implementations.

Referring now to Figures 3C and 3D, it should be noted that in some embodiments, a TILUM 30B which may contain a partial list of talkgroup identifiers is utilized to reduce the size of each message sent over the air. The TILUM 30B is arranged so that it is capable of containing a fixed number of provisioned talkgroup identifiers 32. This fixed number is preferably smaller than the largest number of talkgroups provisioned for any one user, but larger than the average number of talkgroups provisioned per user. Accordingly, in this embodiment, the TILUM 30B is a relatively smaller structure, providing storage for the fixed number of talkgroup identifiers 32, and including an additional "more indicator" field 33 which indicates whether the user has more talkgroups provisioned than that included in the TILUM 30B. Correspondingly, a PTIR 20B in such an embodiment may also include a "more indicator" 23 to indicate to the network that another set of talkgroup identifiers 32 in an additional TILUM 30B is required.

With regard to a method similar to that depicted in Figure 4, in which a network utilizes TILUMs 30B with a "more indicator" 33, after receiving a PTIR 20B from the user device, the network generates a TILUM 30B containing a fixed number of talkgroup identifiers 32 along with a "more indicator" 33 indicating that more talkgroup identifiers 32 are to be provided.

With regard to a method similar to that depicted in Figure 2, for a user device to utilize a TILUM 30B, if the "more indicator" 33 in the TILUM 30B received from the network indicates there are more talkgroup identifiers 32 to be provided, the user device makes another PTIR 20B of the network.

Similarly, in another embodiment, if the network receives a subsequent TILUM 30B within a certain period of time after sending a first TILUM 30B with a "more indicator" 33, the network sends a respective subsequent TILUM 30B containing a list of the next fixed number of talkgroup identifiers 32. The last TILUM 30B containing the last talkgroup identifiers 32 will have a "more indicator" 33 set to a value indicating that there is no more, and accordingly no subsequent PTIR 20B is sent to the network from the user device at that time.

Referring to Figure 5, the steps performed by a user device for provisioned talkgroup identifier discovery according to a network registration based embodiment of the invention, will now be discussed. In this embodiment, a communications system provides to the user device identifiers of the talkgroups every time the user device sends a network registration request.

This method starts with the user device powering up at step 300. At step 310 the user device requests registration on the network over the air. At step 320, the user device receives an enhanced registration accept message (or other appropriate registration acceptance message) which contains the provisioned talkgroup identifiers. Preferably, the provisioned talkgroup identifiers are appended to the registration accept message, and no portion of the conventional registration accept message is replaced. This message is received over the air. At step 330, the user device stores and/or displays the received talkgroup identifiers 330 for use by a user of the device.

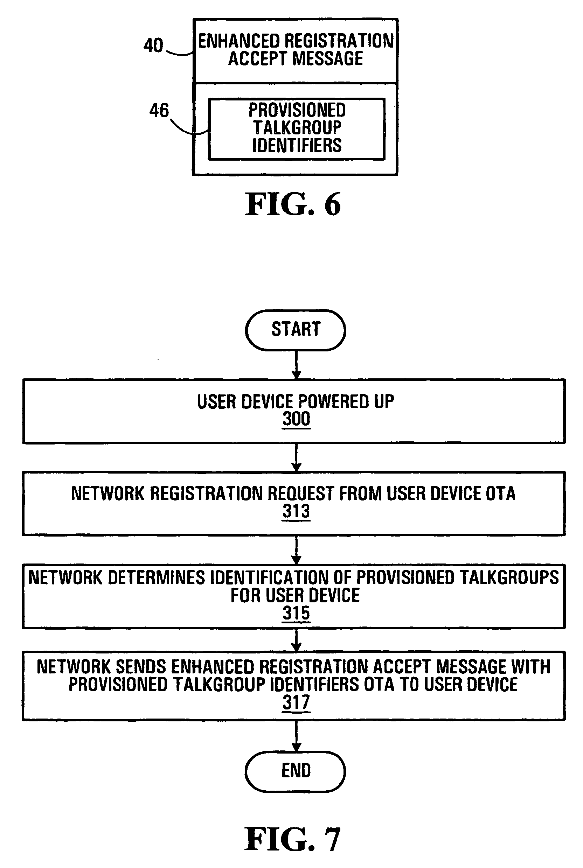

Referring to Figure 6, an example of a datagram according to a further embodiment of the invention for the enhanced registration accept message, will now be discussed.

The enhanced registration accept message, generally indicated at 40, includes a number of various identifiers and network variables for facilitating registration of communication with the user device and for verifying at the user device that registration was successful (not shown). It may include other types of fields which are conventional to a particular registration accept message within a system in which it is used. For this embodiment however, in addition to these types of fields, the message also includes the provisioned talkgroup identifiers 46, these not being included in conventional registration accept messages.

Referring to Figure 7, the steps performed by a network for talkgroup identifier discovery according to another network registration based embodiment of the invention, will now be discussed. In this embodiment a communications system provides to the user device identifiers of the talkgroups every time the user device sends a network registration request.

The method starts at step 313 with the network receiving a registration request from the user device over the air. More generally, any appropriate registration message might be received in this step. In an iDEN^{™} system, this message might be forwarded to the DAP. Next, at step 315, the network determines the provisioned talkgroups for the user device from which the registration request message was received. For example, in an iDEN^{™} implementation this might involve the DAP querying the D-HLR for this information. At step 317, the network sends an enhanced registration accept message containing the provisioned talkgroup identifier over the air to the user device. This message might for example be generated by the DAP if the network is an iDEN^{™} network.

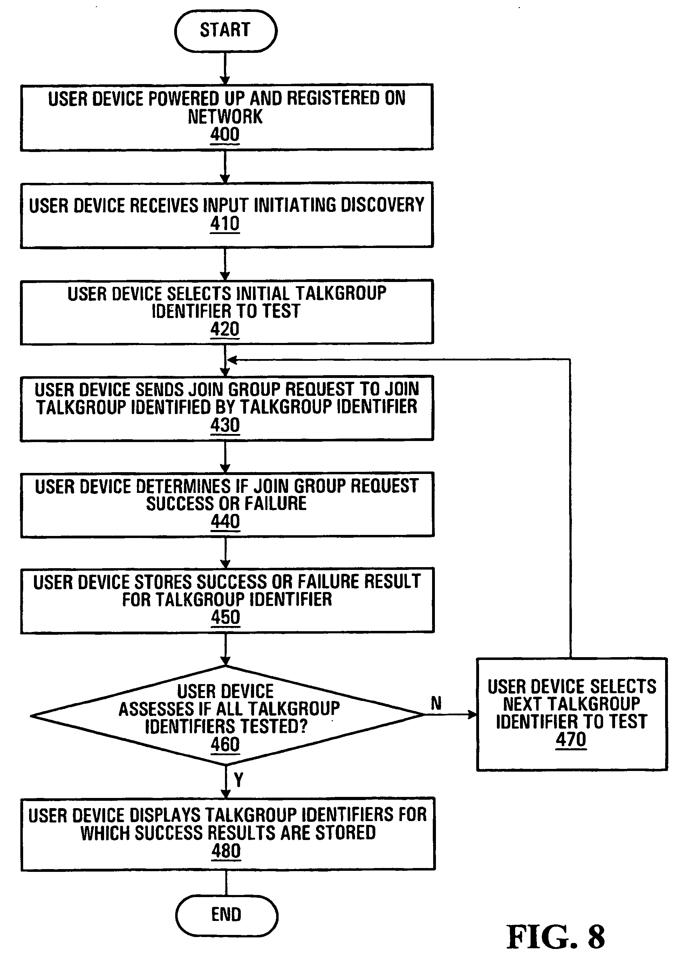

Referring to Figure 8, the steps performed by a user device for talkgroup identifier discovery according to another embodiment of the invention, will now be discussed. In this embodiment, the user device determines the identifiers of the talkgroups by automatically attempting to join various talkgroups, and storing the results by talkgroup identifier. In this embodiment, there is no requirement to make any changes whatsoever on the network side. The method is entirely implemented in the user device.

The method begins at step 400 with the user device powering up and registering with the network. At step 410, the user device receives an input requesting the initiation of talkgroup identifier discovery. This input might be from a user of the device via any appropriate user interface. Alternatively, the input might be simply the powering on of the device as took place at step 400. At step 420, the user device selects an initial talkgroup identifier to test. At step 430, the user device sends a join group request message to join the talkgroup identified by the talkgroup identifier. A "Join group request" message is a message particular to the iDEN^{™} standards. Any other appropriate message for joining a particular talkgroup can alternatively be employed in different systems. At step 440, the user device determines whether or not the join group request method resulted in success or failure from the indication of registration success or failure in the registration accept message returned to the user device. At step 450, the user device stores information sufficient to identify whether a particular talkgroup is a provisioned talkgroup or not. This might for example involve storing for each talkgroup an indication of whether or not the request resulted in success or failure. Alternatively, the user device may simply store the talkgroup identifiers for the talkgroups which were successful. At step 460, if the user device has not assessed all of the talkgroup identifiers available for testing (no path) then at step 470 the user device selects a next talkgroup identifier to test and continue with the method at step 430. On the other hand, if at step 460 it is determined that all of the talkgroup identifiers have been tested, then at step 480 the user device displays and/or stores the talkgroup identifiers for which success results were achieved.

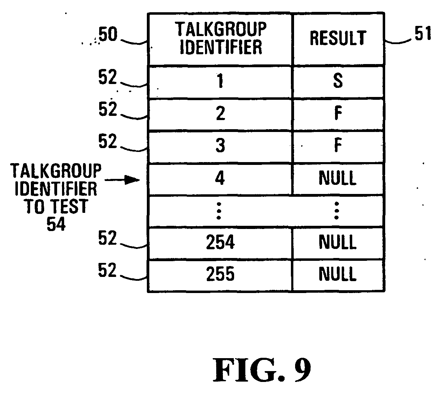

Referring to Figure 9, a talkgroup test memory store according to another embodiment of the invention for organizing and storing success or failure of join group requests by the user device by talkgroup identifier, will now be discussed.

In the example of Figure 9, a test memory store is shown having two columns 50,51. Column 50 contains the talkgroup identifiers, and column 51 contains the results for a corresponding talkgroup identifier. In the illustrated example, there are 255 possible talkgroup identifiers labelled 1 through 255. The results 51 are indicated by either an S for success or an F for failure. For a talkgroup which has not yet been tested, a null indication is indicated. In the illustrated example, talkgroup identifiers 1,2,3 indicated by 52 have been tested, and talkgroup identifier 4 is the next talkgroup identifier to test 54. It is to be understood that the structure of Figure 9 is only one particular example. Any appropriate information can be stored which will allow an identification of which talkgroups resulted in success. For example, if the table includes an entry for every possible talkgroup, then it would not be necessary to include an entry for the talkgroup identifier since that could be synonymous with the particular memory location.

In some embodiments, a variable size test memory store (not shown) similar to the test memory store of Figure 9 is utilized. The variable size test memory store is a variable sized list of talkgroup identifiers and includes an extra field which stores a value indicative of the size of the list or the number of entries in the list which correspond to talkgroup identifiers for which the join group request was successful. In such an embodiment, the variable size test memory store does not include any NULL pointers or failed talkgroup identifiers.

In some embodiments, the test memory store of Figure 9 may be updated or refreshed at any time upon the user initiating a subsequent request for the provisioned talkgroup id's.

In yet another embodiment, no specific PTIR is generated by the user device. Rather, on the network side, every time the user device connects to the network the network voluntarily generates the TILUM and sends this to the user device. In another embodiment, if there is any change to the list of talkgroups provisioned, a TILUM or an additional TILUM is generated.

In other embodiments, the method and system are adapted to provide peripheral support for a wired device which is capable of participating in wireless sessions with various talkgroups, and which has a number of talkgroups provisioned for it. Such a wired device participates via a network interworking function, so that although the wired device is not within the wireless network, it appears as though it is, and participates in a group call like a wireless device. Hence, according to these embodiments, the wired user device is provided with a list of talkgroups which have been provisioned for the device. For these embodiments, talkgroup discovery occurs in a manner analogous to the manner described hereinabove. Hence, a wired user device may request or be delivered the talkgroup indexes which are provisioned for it.

Numerous modifications and variations of the present invention are possible in light of the above teachings. It is therefore to be understood that within the scope of the appended claims, the invention may be practiced otherwise than as specifically described herein.

## Claims

1. A user device (170) capable of walkie-talkie-like functionality adapted to participate in half-duplex calls through a network (110) delivering walkie-talkie-like communications in which at any one time the network (110) is capable of transmitting voice communication from a talking or transmitting party's device to a listening or receiving party's device, but cannot simultaneously transmit voice communication from the receiving party's device to the talking party's device while the talking party's device is transmitting voice to the receiving party's device, the user device (170) being capable of receiving from the network (110) talkgroup identifiers (32, 46, 52), **characterized in that** the user device (170) is adapted to send a request to the network (110) and is adapted to receive, in response to said request, all of the provisioned talk group identifiers of the user device comprising a respective talkgroup identifier (32, 46, 52) for each talkgroup provisioned for the user device (170) and is adapted to make information pertaining to said identifiers (32, 46, 52) available to a user of the user device (170).

2. A user device (170) according to claim 1, wherein the user device (170) is a wireless device.

3. A user device (170) according to claims 1 or 2 comprising a message generation and processing function (174) adapted to:
transmit a first message (20, 20B) to the network (110) to request the respective provisioned talkgroup identifiers (32, 46, 52) for each talkgroup provisioned for the user device (170); and
receive at least a second message (30, 30B) from the network (110) containing the provisioned talkgroup identifiers (32, 46, 52).

4. A user device (170) according to claim 3, wherein the first and second messages (20, 20B, 30, 30B) are network layer messages.

5. A user device (170) according to any of claims 1 to 4 further comprising:
memory (178) for storing data for access by the user device (1.70), the memory (178) comprising a data structure stored in said memory (178), said data structure being a message containing a provisioned talkgroup identifier (32, 46, 52) for each talkgroup provisioned for the user device (170).

6. A user device (170) according to claim 5 wherein the data structure includes a registration accept message (40).

7. A user device (170) according to claim 6 wherein the data structure includes the provisioned talkgroup identifiers.

8. A user device (170) capable of walkie-talkie-like functionality adapted to participate in half-duplex calls through a network (110) delivering walkie-talkie-like communications in which at any one time the network (110) is capable of transmitting voice communication from a talking or transmitting party's device to a listening or receiving party's device, but cannot simultaneously transmit voice communication from the receiving party's device to the talking party's device while the talking party's device is transmitting voice to the receiving party's device, the user device (170) being capable of receiving from the network (110) talkgroup identifiers (32, 46, 52), **characterized in that** the user device (170) is adapted to obtain, in response to an input at the user device, all of the provisioned talkgroup identifiers of the user device comprising a respective talkgroup identifier (32, 46, 52) for each talkgroup provisioned for the user device (170), said user device (170) being adapted to obtain said talkgroup identifiers by transmitting respective messages in an attempt to join each of a plurality of talkgroups that could possibly be provisioned (430), and maintaining a record of which talkgroups were successfully joined (450); and is adapted to make information pertaining to said identifiers (32, 46, 52) available to a user of the user device (170).

9. A user device (170) according to claim 8, wherein the user device (170) is a wireless device.

10. A user device (170) according to claim 8 or 9, wherein the input at the user device comprises the user device being powered on.

11. A system (100) comprising:
a network (110) adapted to provide walkie-talkie-like communications services to user devices (170) capable of walkie-talkie-like functionality in which at any one time the network (110) is capable of transmitting voice communication from a talking or transmitting party's device to a listening or receiving party's device, but cannot simultaneously transmit voice communication from the receiving party's device to the talking party's device while the talking party's device is transmitting voice to the receiving party's device, the network (110) being adapted to provide to a user device (170) talkgroup identifiers (32, 46, 52), the system being **characterized in that** the user device (170) is adapted to send a request to the network (110) and is adapted to receive, in response to said request, all of the provisioned talk group identifiers of the user device comprising a respective talkgroup identifier (32, 46, 52) for each talkgroup provisioned for the user device (170) and is adapted to make information pertaining to said identifiers (32, 46, 52) available to a user of the user device (170).

12. A system (100) according to claim 11 further comprising:
at least one user device (170) capable of walkie-talkie-like functionality.

13. A system (100) according to claim 11 or 12, wherein:
the user device (170) comprises a message generation and processing function (174) adapted to:
transmit a first message (20, 20B) to the network (110) to request the respective provisioned talkgroup identifiers (32, 46, 52) for each talkgroup provisioned for the user device (170); and
receive at least a second message (30, 30B) from the network (110) containing the provisioned talkgroup identifiers (32, 46, 52).

14. A system (100) according to any of claims 11 to 13, wherein the user devices (170) are wireless devices.

15. A system (100) according to any of claims 11 to 14 comprising a message generation and processing function (174) adapted to:
receive a first message (20, 20B) from a particular user device (170) requesting the respective provisioned talkgroup identifiers (32, 46, 52) for each talkgroup provisioned for the user device (170); and
transmit at least a second message (30, 30B) containing the provisioned talkgroup identifiers (32, 46, 52).

16. A system (100) comprising:
a network (110) adapted to provide walkie-talkie-like communications services to user devices (170) capable of walkie-talkie-like functionality in which at any one time the network (110) is capable of transmitting voice communication from a talking or transmitting party's device to a listening or receiving party's device, but cannot simultaneously transmit voice communication from the receiving party's device to the talking party's device while the talking party's device is transmitting voice to the receiving party's device, the network (110) being adapted to provide to a user device (170) talkgroup identifiers (32, 46, 52), the system being **characterized in that** the user device (170) is adapted to obtain, in response to an input at the user device, all of the provisioned talkgroup identifiers of the user device comprising a respective talkgroup identifier (32, 46, 52) for each talkgroup provisioned for the user device (170), said user device (170) being adapted to obtain said talkgroup identifiers by transmitting respective messages in an attempt to join each of a plurality of talkgroups that could possibly be provisioned (430), and maintaining a record of which talkgroups were successfully joined (450); and is adapted to make information pertaining to said identifiers (32, 46, 52) available to a user of the user device (170).

17. A method of talkgroup discovery in a user device (170) capable of walkie-talkie-like functionality and adapted to participate in half-duplex calls through a network (110) delivering walkie-talkie-like communications in which at any one time the network (110) is capable of transmitting voice communication from a talking or transmitting party's device to a listening or receiving party's device, but cannot simultaneously transmit voice communication from the receiving party's device to the talking party's device while the talking party's device is transmitting voice to the receiving party's device, the method comprising the step of:
the network (110) providing (223, 225, 227, 313, 315, 317) the user device (170) with talkgroup identifiers (32, 46, 52);
the method being **characterized by** the steps of:
transmitting (220, 310) from the user device (170) a request to the network (110);
receiving at the user device (170) a response from the network (110) comprising all of the provisioned talk group identifiers of the user device comprising a respective talkgroup identifier (32, 46, 52) for each talkgroup provisioned for the user device (170); and
the user device (170) making the respective provisioned talkgroup identifiers (32, 46, 52) available (240, 330) to a user of the user device (170).

18. A method according to claim 17, wherein the user device (170) is a wireless device.

19. A method according to claim 17 or 18, wherein the request and response are sent using network layer messages.

20. A method according any of claims 17 to 9, wherein the request is a registration request (310, 313) and the response includes a registration accept message (320, 317).

21. A method of talkgroup discovery in a user device (170) capable of walkie-talkie-like functionality and adapted to participate in half-duplex calls through a network (110) delivering walkie-talkie-like communications in which at any one time the network (110) is capable of transmitting voice communication from a talking or transmitting party's device to a listening or receiving party's device, but cannot simultaneously transmit voice communication from the receiving party's device to the talking party's device while the talking party's device is transmitting voice to the receiving party's device, the method comprising the step of:
the network (110) providing (223, 225, 227, 313, 315, 317) the user device (170) with talkgroup identifiers (32, 46, 52);
the method being **characterized in that**:
in response to an input at the user device, the user device (170) obtains the respective talkgroup identifiers (32, 46, 52) by transmitting respective messages in an attempt to join each of a plurality of talkgroups that could possibly be provisioned (430); and maintaining a record of which talkgroups were successfully joined (450); and
the user device makes the respective provisioned talkgroup identifiers (32, 46, 52) available (240, 330) to a user of the user device (170).

## Patentansprüche

1. Ein Benutzergerät (170), mit der Fähigkeit zu Walkie-Talkie-ähnlicher, zur Teilnahme in Halbduplexgesprächen über ein Netz (110) geeigneter Funktionalität für die Übertragung von Walkie-Talkie-ähnlicher Kommunikation, in der das Netz (110) zu einem beliebigen Zeitpunkt in der Lage ist, Sprachkommunikation von dem Gerät eines sprechenden oder sendenden Teilnehmers an das Gerät eines hörenden oder empfangenden Teilnehmers zu übertragen, jedoch nicht in der Lage ist, Sprachkommunikation gleichzeitig von dem Gerät des empfangenden Teilnehmers an das Gerät des sprechenden Teilnehmers zu übertragen, während das Gerät des sprechenden Teilnehmers Sprache an das Gerät des empfangenden Teilnehmers überträgt und wobei das Benutzergerät (170) Gesprächsgruppenkennungen (32, 46, 52) vom Netz (110) empfangen kann, **dadurch gekennzeichnet, dass** das Benutzergerät (170) zur Aussendung einer Aufforderung an das Netz (110) geeignet ist und in Antwort auf eine solche Anforderung geeignet ist, alle bereitgestellten Gesprächsgruppenkennungen des Benutzergeräts, bestehend aus der jeweiligen Gesprächsgruppenkennung (32, 46, 52) für jede für das Benutzergerät (170) bereitgestellte Gesprächsgruppe zu empfangen und welches geeignet ist, Informationen in Bezug auf die genannten Kennungen (32, 46, 52) für einen Benutzer des Benutzergeräts (170) bereitzustellen.

2. Ein Benutzergerät (170) gemäß Anspruch 1, wobei es sich bei dem Benutzergerät (170) um ein drahtloses Gerät handelt.

3. Ein Benutzergerät (170) gemäß Ansprüchen 1 oder 2, welches eine meldungsgenerierende und meldungsverarbeitende Funktion (174) umfasst und geeignet ist:
Die erste Meldung (20, 20B) an das Netz (110) zu übertragen, um die jeweils bereitgestellten Gesprächsgruppenkennungen (32, 46, 52) für jede für das Benutzergerät (170) bereitgestellte Gesprächsgruppe anzufordern; und
mindestens eine zweite Meldung (30, 30B) vom Netz (110) zu empfangen, welche die bereitgestellten Gesprächsgruppenkennungen (32, 46, 52) enthält.

4. Ein Benutzergerät (170) gemäß Anspruch 3, wobei die ersten und zweiten Meldungen (20, 20B, 30, 30B) Netzwerkschichtmeldungen sind.

5. Ein Benutzergerät (170) gemäß einem der Ansprüche 1 bis 4 weiter umfassend: Speicher (178) zur Speicherung von Daten für den Zugriff durch das Benutzergerät (170), der eine in ihm gespeicherte Datenstruktur umfasst, welche einer Meldung darstellt, die eine bereitgestellte Gesprächsgruppenkennung (32, 46, 52) für jede für das Benutzergerät (170) bereitgestellte Gesprächsgruppe enthält.

6. Ein Benutzergerät (170) gemäß Anspruch 5, wobei die Datenstruktur eine Anmeldebestätigungsmeldung (40) enthält.

7. Ein Benutzergerät (170) gemäß Anspruch 6, wobei die Datenstruktur die bereitgestellten Gesprächsgruppenkennungen enthält.

8. Ein Benutzergerät (170), mit der Fähigkeit zu Walkie-Talkie-ähnlicher, zur Teilnahme in Halbduplexgesprächen über ein Netz (110) geeigneter Funktionalität für die Übertragung von Walkie-Talkie-ähnlicher Kommunikation, in der das Netz (110) zu einem beliebigen Zeitpunkt in der Lage ist, Sprachkommunikation von dem Gerät eines sprechenden oder sendenden Teilnehmers an das Gerät eines hörenden oder empfangenden Teilnehmers zu übertragen, jedoch nicht in der Lage ist, Sprachkommunikation gleichzeitig von dem Gerät des empfangenden Teilnehmers an das Gerät des sprechenden Teilnehmers zu übertragen, während das Gerät des sprechenden Teilnehmers Sprache an das Gerät des empfangenden Teilnehmers überträgt und wobei das Benutzergerät (170) Gesprächsgruppenkennungen (32, 46, 52) vom Netz (110) empfangen kann, **dadurch gekennzeichnet, dass** das Benutzergerät (170) in Antwort auf eine Eingabe an dem Benutzergerät geeignet ist, alle bereitgestellten Gesprächsgruppenkennungen des Benutzergeräts (170), bestehend aus der jeweiligen Gesprächsgruppenkennung (32, 46, 52) für jede für das Benutzergerät (170) bereitgestellte Gesprächsgruppe zu empfangen und wobei das Benutzergerät geeignet ist, die genannten Gesprächsgruppenkennungen zu empfangen, indem es die jeweiligen Meldungen überträgt, wobei versucht wird, jede einzelne aus einer Vielzahl von potenziell bereitgestellten Gesprächsgruppen (430) zu verbinden, und Aufzeichnung eines Nachweises der erfolgreich verbundenen Gesprächsgruppen (450); und welches geeignet ist, Informationen in Bezug auf die genannten Kennungen (32, 46, 52) für den Benutzer des Benutzergeräts (170) bereitzustellen.

9. Ein Benutzergerät (170) gemäß Anspruch 8, wobei es sich bei dem Benutzergerät (170) um ein drahtloses Gerät handelt.

10. Ein Benutzergerät (170) gemäß Anspruch 8 oder 9, wobei die Eingabe am Benutzergerät das Anschalten des Benutzergeräts umfasst.

11. Ein System (100), umfassend:
Ein Netz (110), geeignet zur Bereitstellung von Walkie-Talkie-ähnlichen Kommunikationsdiensten an Benutzergeräte (170), mit der Fähigkeit zu Walkie-Talkie-ähnlicher Funktionalität, in der das Netz (110) zu einem beliebigen Zeitpunkt in der Lage ist, Sprachkommunikation von dem Gerät eines sprechenden oder sendenden Teilnehmers an das Gerät eines hörenden oder empfangenden Teilnehmers zu übertragen, jedoch nicht in der Lage ist, Sprachkommunikation gleichzeitig von dem Gerät des empfangenden Teilnehmers an das Gerät des sprechenden Teilnehmers zu übertragen, während das Gerät des sprechenden Teilnehmers Sprache an das Gerät des empfangenden Teilnehmers überträgt und wobei das Netz (110) geeignet ist, Gesprächsgruppenkennungen (32, 46, 52) für das Benutzergerät (170) bereitzustellen und das System **dadurch gekennzeichnet ist, dass** das Benutzergerät (170) zur Aussendung einer Aufforderung an das Netz (110) und in Antwort auf eine solche Anforderung geeignet ist, alle bereitgestellten Gesprächsgruppenkennungen des Benutzergeräts, bestehend aus der jeweiligen Gesprächsgruppenkennung (32, 46, 52) für jede für das Benutzergerät (170) bereitgestellte Gesprächsgruppe zu empfangen und welches geeignet ist, Informationen in Bezug auf die genannten Kennungen (32, 46, 52) für den Benutzer des Benutzergeräts (170) bereitzustellen.

12. Ein System (100) gemäß Anspruch 11, weiter umfassend:
Mindestens ein Benutzergerät (170) mit Walkie-Talkie-ähnlicher Funktionalität.

13. Ein System (100) gemäß Anspruch 11 oder 12, wobei:
Das Benutzergerät (170) eine meldungsgenerierende und meldungsverarbeitende Funktion (174) umfasst und dazu geeignet ist:
die erste Meldung (20, 20B) an das Netz (110) zu übertragen, um die jeweils bereitgestellten Gesprächsgruppenkennungen (32, 46, 52) für jede für das Benutzergerät (170) bereitgestellte Gesprächsgruppe anzufordern; und
mindestens eine zweite Meldung (30, 30B) von dem Netz (110) zu empfangen, welche die bereitgestellten Gesprächsgruppenkennungen (32, 46, 52) enthält.

14. Ein System (100) gemäß einem der Ansprüche 11 bis 13, wobei es sich bei den Benutzergeräten (170) um drahtlose Geräte handelt.

15. Ein System (100) gemäß einem der Ansprüche 11 bis 14, welches eine meldungsgenerierende und meldungsverarbeitende Funktion (174) umfasst und geeignet ist:
Die erste Meldung (20, 20B) von einem bestimmten Benutzergerät (170) zu empfangen, welche die jeweils bereitgestellten Gesprächsgruppenkennungen (32, 46, 52) für jede für das Benutzergerät (170) bereitgestellte Gesprächsgruppe anfordert; und
mindestens eine zweite Meldung (30, 30B) zu übertragen, welche die bereitgestellten Gesprächsgruppenkennungen (32, 46, 52) enthält.

16. Ein System (100), umfassend:
Ein Netz (110), geeignet zur Bereitstellung von Walkie-Talkie-ähnlichen Kommunikationsdiensten an Benutzergeräte (170), mit der Fähigkeit zu Walkie-Talkie-ähnlicher Funktionalität, in der das Netz (110) zu einem beliebigen Zeitpunkt in der Lage ist, Sprachkommunikation von dem Gerät eines sprechenden oder sendenden Teilnehmers an das Gerät eines hörenden oder empfangenden Teilnehmers zu übertragen, jedoch nicht in der Lage ist, Sprachkommunikation gleichzeitig von dem Gerät des empfangenden Teilnehmers an das Gerät des sprechenden Teilnehmers zu übertragen, während das Gerät des sprechenden Teilnehmers Sprache an das Gerät des empfangenden Teilnehmers überträgt und wobei das Netz (110) geeignet ist, Gesprächsgruppenkennungen (32, 46, 52) für das Benutzergerät (170) bereitzustellen und das System **dadurch gekennzeichnet ist, dass** das Benutzergerät (170) geeignet ist, nach Eingabe am Benutzergerät, alle bereitgestellten Gesprächsgruppenkennungen des Benutzergeräts, bestehend aus der jeweiligen Gesprächsgruppenkennung (32, 46, 52) für jede für das Benutzergerät (170) bereitgestellte Gesprächsgruppe einzuholen und das genannte Benutzergerät (170) geeignet ist, die genannten Gesprächsgruppenkennungen durch Übertragung der jeweiligen Meldungen einzuholen und wobei versucht wird, jede einzelne aus einer Vielzahl von potenziell bereitgestellten Gesprächsgruppen (430) zu verbinden, und Aufzeichnung eines Nachweises der erfolgreich verbundenen Gesprächsgruppen (450); und welches geeignet ist, Informationen in Bezug auf die genannten Kennungen (32, 46, 52) für den Benutzer des Benutzergeräts (170) bereitzustellen.

17. Verfahren zur Gesprächsgruppenerkennung in einem Benutzergerät (170), mit Walkie-Talkie-ähnlicher Funktionalität, wobei das Benutzergerät zur Teilnahme in Halbduplexgesprächen über ein Netz (110) geeigneter Funktionalität für die Übertragung von Walkie-Talkie-ähnlicher Kommunikation geeignet ist, in der das Netz (110) zu einem beliebigen Zeitpunkt in der Lage ist, Sprachkommunikation von dem Gerät eines sprechenden oder sendenden Teilnehmers an das Gerät eines hörenden oder empfangenden Teilnehmers zu übertragen, jedoch nicht in der Lage ist, Sprachkommunikation gleichzeitig von dem Gerät des empfangenden Teilnehmers an das Gerät des sprechenden Teilnehmers zu übertragen, wobei das Verfahren Folgendes umfasst:
Netz (110) welches Gesprächsgruppenkennungen (32, 46, 52) für das Benutzergerät (170) bereitstellt (223, 225, 227, 313, 315, 317);
Verfahren, **gekennzeichnet durch** Folgendes:
Übertragung (220, 310) einer Aufforderung von dem Benutzergerät (170) an das Netz (110);
Empfang einer Antwort vom Netz (110) an das Benutzergerät (170), welche alle bereitgestellten Gesprächsgruppenkennungen des Benutzergeräts umfasst, die eine jeweilige Gesprächsgruppenkennung (32, 46, 52) für jede für das Benutzergerät (170) bereitgestellte Gesprächsgruppe umfasst; und
Benutzergerät (170), welches die jeweiligen bereitgestellten Gesprächsgruppenkennungen (32, 46, 52) an einen Benutzer des Benutzergeräts (170) bereitstellt (240, 330).

18. Ein Verfahren gemäß Anspruch 17, wobei es sich bei dem Benutzergerät (170) um ein drahtloses Gerät handelt.

19. Ein Verfahren gemäß Anspruch 17 oder 18, wobei die Aufforderung und Antwort unter Verwendung von Netzwerkschichtmeldungen ausgesendet wird.

20. Ein Verfahren gemäß einem der Ansprüche 17 bis 9, wobei die Aufforderung eine Anmeldeaufforderung (310, 313) ist und die Antwort eine Anmeldebestätigungsmeldung (320, 317) enthält.

21. Verfahren zur Gesprächsgruppenerkennung in einem Benutzergerät (170), mit der Fähigkeit zu Walkie-Talkie-ähnlicher, zur Teilnahme in Halbduplexgesprächen über ein Netz (110) geeigneter Funktionalität für die Übertragung von Walkie-Talkie-ähnlicher Kommunikation, in der das Netz (110) zu einem beliebigen Zeitpunkt in der Lage ist, Sprachkommunikation von dem Gerät eines sprechenden oder sendenden Teilnehmers an das Gerät eines hörenden oder empfangenden Teilnehmers zu übertragen, jedoch nicht in der Lage ist, Sprachkommunikation gleichzeitig von dem Gerät des empfangenden Teilnehmers an das Gerät des sprechenden Teilnehmers zu übertragen, wobei das Verfahren Folgendes umfasst:
das Netz (110) zur Bereitstellung (223, 225, 227, 313, 315, 317) von Gesprächsgruppenkennungen (32, 46, 52) für das Benutzergerät (170);
das Verfahren ist **dadurch gekennzeichnet, dass**:
Das Benutzergerät (170), als Antwort auf eine Eingabe an dem Benutzergerät, die jeweiligen Gesprächsgruppenkennungen (32,46, 52) durch Übertragung der jeweiligen Meldungen einholt und wobei versucht wird, jede einzelne aus einer Vielzahl von potenziell bereitgestellten Gesprächsgruppen (430) zu verbinden; und Aufzeichnung eines Nachweises der erfolgreich verbundenen Gesprächsgruppen (450); und
Bereitstellung (240, 330) der jeweiligen bereitgestellten Gesprächsgruppenkennungen (32, 46, 52) durch das Benutzergerät (170) an einen Benutzer des Benutzergeräts (170).

## Revendications

1. Dispositif d'utilisateur (170) à fonctionnalité de type « talkie-walkie » adapté pour participer à des appels en semi-duplex via un réseau (110) qui assure des communications de type « talkie-walkie » dans lequel le réseau (110) est en mesure à tout moment de transmettre des communications vocales du dispositif d'un abonné qui parle ou transmet au dispositif d'un abonné qui écoute ou reçoit mais qui ne peut pas transmettre simultanément une communication vocale du dispositif de l'abonné qui reçoit au dispositif de l'abonné qui parle pendant que le dispositif de l'abonné qui parle transmet une communication vocale au dispositif de l'abonné qui reçoit, le dispositif d'utilisateur (170) étant en mesure de recevoir du réseau (110) des identifants de talkgroups (conférences) (32, 46, 52), se caractérisant en cela que le dispositif d'utilisateur (170) est adapté pour envoyer une demande au réseau (110) et pour recevoir, en réponse à ladite demande, tous les identifiants de talkgroups configurés du dispositif d'utilisateur comprenant un identifiant de talkgroup respectif (32, 46, 52) correspondant à chaque talkgroup configuré pour le dispositif d'utilisateur (170) et est également adapté pour mettre les informations relatives auxdits identifiants (32, 46, 52) à la disposition d'un utilisateur du dispositif d'utilisateur (170).

2. Dispositif d'utilisateur (170) conforme à la revendication 1, dans lequel le dispositif d'utilisateur (170) est un dispositif sans fil.

3. Dispositif d'utilisateur (170) conforme à la revendication 1 ou 2, comprenant une fonction de génération et de traitement de messages (174) adaptée pour :
transmettre un premier message (20, 20B) au réseau (110) afin de demander les identifiants de talkgroups configurés respectifs (32, 46, 52) correspondant à chaque talkgroup configuré pour le dispositif d'utilisateur (170) ; et
recevoir au moins un deuxième message (30, 30B) du réseau (110) contenant les identifiants de talkgroups configurés (32, 46, 52).

4. Dispositif d'utilisateur (170) conforme à la revendication 3, dans lequel les premier et deuxième messages (20, 20B, 30, 30B) sont des messages de couche réseau.

5. Dispositif d'utilisateur (170) conforme à l'une quelconque des revendications 1 à 4 comportant en outre :
une mémoire (178) pour le stockage de données auxquelles le dispositif d'utilisateur (170) peut accéder, la mémoire (178) comprenant une structure de données stockées dans ladite mémoire (178), ladite structure de données étant un message contenant un identifiant de talkgroup configuré (32, 46, 52) correspondant à chaque talkgroup configuré pour le dispositif d'utilisateur (170).

6. Dispositif d'utilisateur (170) conforme à la revendication 5, dans lequel la structure de données comprend un message Accepter enregistrement (40).

7. Dispositif d'utilisateur (170) conforme à la revendication 6, dans lequel la structure de données comprend les identifiants de talkgroups configurés.

8. Dispositif d'utilisateur (170) à fonctionnalité de type « talkie-walkie » adapté pour participer à des appels en semi-duplex via un réseau (110) assurant des communications de type « talkie-walkie » dans lequel le réseau (110) est en mesure à tout moment de transmettre des communications vocales du dispositif d'un abonné qui parle ou transmet au dispositif d'un abonné qui écoute ou reçoit mais qui ne peut pas transmettre simultanément une communication vocale du dispositif de l'abonné qui reçoit au dispositif de l'abonné qui parle pendant que le dispositif de l'abonné qui parle transmet une communication vocale au dispositif de l'abonné qui reçoit, le dispositif d'utilisateur (170) étant en mesure de recevoir du réseau (110) des identifants de talkgroups (conférences) (32, 46, 52), se caractérisant en cela que le dispositif d'utilisateur (170) est adapté pour obtenir, en réponse à une saisie sur le dispositif d'utilisateur, tous les identifiants de talkgroups configurés du dispositif d'utilisateur comprenant un identifiant de talkgroups (32, 46, 52) correspondant à chaque talkgroup configuré pour le dispositif d'utilisateur (170), ledit dispositif d'utilisateur (170) étant adapté pour obtenir lesdits identifiants de talkgroups en transmettant des messages respectifs pour essayer de joindre chaque élément d'une pluralité de talkgroups pouvant être configurés (430), et tenir à jour un enregistrement des talkgroups dont la jonction a réussi (450) ; le dispositif d'utilisateur (170) ci-décrit est en outre adapté pour mettre les informations relatives auxdits identifiants (32, 46, 52) à la disposition de son utilisateur.

9. Dispositif d'utilisateur (170) conforme à la revendication 8, dans lequel le dispositif d'utilisateur (170) est un dispositif sans fil.

10. Dispositif d'utilisateur (170) conforme à la revendication 8 ou 9, dans lequel la saisie sur le dispositif d'utilisateur comprend la mise sous tension du dispositif.

11. Système (100) comprenant:
un réseau (110) adapté pour fournir des services de communications de type « talkie-walkie » à des dispositifs d'utilisateur (170) à fonctionnalité de type « talkie-walkie » dans lequel le réseau (110) est en mesure à tout moment de transmettre des communications vocales du dispositif d'un abonné qui parle ou transmet au dispositif d'un abonné qui écoute ou reçoit mais qui ne peut pas transmettre simultanément une communication vocale du dispositif de l'abonné qui reçoit au dispositif de l'abonné qui parle pendant que le dispositif de l'abonné qui parle transmet une communication vocale au dispositif de l'abonné qui reçoit, le réseau (110) étant adapté pour fournir à un dispositif d'utilisateur (170) des identifiants de talkgroups (32, 46, 52), le système ci-décrit se caractérisant en cela que le dispositif d'utilisateur (170) est adapté pour envoyer une demande au réseau (110) et pour recevoir, en réponse à ladite demande, tous les identifiants de talkgroups configurés du dispositif d'utilisateur comprenant un identifiant de talkgroup respectif (32, 46, 52) correspondant à chaque talkgroup configuré pour le dispositif d'utilisateur (170) ; le dispositif d'utilisateur (170) ci-décrit est en outre adapté pour mettre les informations relatives auxdits identifiants (32, 46, 52) à la disposition de son utilisateur.

12. Système (100) conforme à la revendication 11 comprenant en outre :
au moins un dispositif d'utilisateur (170) à fonctionnalité de type « talkie-walkie ».

13. Système (100) conforme à la revendication 11 ou 12, dans lequel :
le dispositif d'utilisateur (170) comprend une fonction de génération et de traitement de messages (174) adaptée pour :
transmettre un premier message (20, 20B) au réseau (110) afin de demander les identifiants de talkgroups configurés respectifs (32, 46, 52) correspondant à chaque talkgroup configuré pour le dispositif d'utilisateur (170) ; et
recevoir au moins un deuxième message (30, 30B) du réseau (110) contenant les identifiants de talkgroups configurés (32, 46, 52).

14. Système (100) conforme à l'une quelconque des revendications 11 à 13, dans lequel les dispositifs d'utilisateur (170) sont des dispositifs sans fil.

15. Système (100) conforme à l'une quelconque des revendications 11 à 14 comprenant une fonction de génération et de traitement de messages (174) adaptée pour :
recevoir un premier message (20, 20B) d'un dispositif d'utilisateur (170) particulier demandant les identifiants de talkgroups configurés respectifs (32, 46, 52) correspondant à chaque talkgroup configuré pour le dispositif d'utilisateur (170) ; et
transmettre au moins un deuxième message (30, 30B) contenant les identifiants de talkgroups configurés (32, 46, 52).

16. Système (100) comprenant:
un réseau (110) adapté pour fournir des services de communications de type « talkie-walkie » à des dispositifs d'utilisateur (170) à fonctionnalité de type « talkie-walkie » dans lequel le réseau (110) est en mesure à tout moment de transmettre des communications vocales du dispositif d'un abonné qui parle ou transmet au dispositif d'un abonné qui écoute ou reçoit mais qui ne peut pas transmettre simultanément une communication vocale du dispositif de l'abonné qui reçoit au dispositif de l'abonné qui parle pendant que le dispositif de l'abonné qui parle transmet une communication vocale au dispositif de l'abonné qui reçoit, le réseau (110) étant adapté pour fournir à un dispositif d'utilisateur (170) des identifiants de talkgroups (32, 46, 52), le système se caractérisant en cela que le dispositif d'utilisateur (170) est adapté pour obtenir, en réponse à une saisie sur le dispositif d'utilisateur, tous les identifiants de talkgroups configurés du dispositif d'utilisateur comprenant un identifiant de talkgroups (32, 46, 52) correspondant à chaque talkgroup configuré pour le dispositif d'utilisateur (170), ledit dispositif d'utilisateur (170) étant adapté pour obtenir lesdits identifiants de talkgroups en transmettant des messages respectifs pour essayer de joindre chaque élément d'une pluralité de talkgroups pouvant être configurés (430), et tenir à jour un enregistrement des talkgroups dont la j onction a réussi (450) ; le dispositif d'utilisateur (170) ci-décrit est en outre adapté pour mettre les informations relatives auxdits identifiants (32, 46, 52) à la disposition de son utilisateur.

17. Procédé de recherche de talkgroup dans un dispositif d'utilisateur (170) à fonctionnalité de type « talkie-walkie » et adapté pour participer à des appels en semi-duplex via un réseau (110) assurant des communications de type « talkie-walkie » dans lequel le réseau (110) est en mesure à tout moment de transmettre des communications vocales du dispositif d'un abonné qui parle ou transmet au dispositif d'un abonné qui écoute ou reçoit mais qui ne peut pas transmettre simultanément une communication vocale du dispositif de l'abonné qui reçoit au dispositif de l'abonné qui parle pendant que le dispositif de l'abonné qui parle transmet une communication vocale au dispositif de l'abonné qui reçoit, le procédé comportant l'étape consistant à :
fournir (223, 225, 227, 313, 315, 317) par le réseau (110) au dispositif d'utilisateur (170) les identifiants de talkgroups (32, 46, 52) ;
le procédé **se caractérisant par** les étapes consistant à :
transmettre (220, 310) du dispositif d'utilisateur (170) une demande du réseau (110) ;
recevoir au niveau du dispositif d'utilisateur (170) une réponse du réseau (110) comprenant tous les identifiants de talkgroup configurés du dispositif d'utilisateur y compris un identifiant de talkgroup respectif (32, 46, 52) correspondant à chaque talkgroup configuré pour le dispositif d'utilisateur (170) ; et
faire que le dispositif d'utilisateur (170) ci-décrit mette les identifiants de talkgroups configurés (32, 46, 52) respectifs à la disposition (240, 330) de son utilisateur.

18. Procédé conforme à la revendication 17 dans lequel le dispositif d'utilisateur (170) est un dispositif sans fil.

19. Procédé conforme à la revendication 17 ou 18 dans lequel la demande et la réponse sont envoyées au moyen de messages de couche réseau.

20. Procédé de l'une quelconque des revendications 17 à 19, dans lequel la demande est une demande d'enregistrement (310, 313) et la réponse comprend un message Accepter enregistrement (320, 317).

21. Procédé de recherche de talkgroups dans un dispositif d'utilisateur (170) à fonctionnalité de type « talkie-walkie » adapté pour participer à des appels en semi-duplex via un réseau (110) assurant des communications de type « talkie-walkie » dans lequel le réseau (110) est en mesure à tout moment de transmettre des communications vocales du dispositif d'un abonné qui parle ou transmet au dispositif d'un abonné qui écoute ou reçoit mais qui ne peut pas transmettre simultanément une communication vocale du dispositif de l'abonné qui reçoit au dispositif de l'abonné qui parle pendant que le dispositif de l'abonné qui parle transmet une communication vocale au dispositif de l'abonné qui reçoit, le procédé comportant l'étape consistant à :
fournir (223, 225, 227, 313, 315, 317) par le réseau (110) au dispositif d'utilisateur (170) les identifiants de talkgroups (32, 46, 52) ;
le procédé se caractérisant en cela que :
en réponse à une saisie sur le dispositif d'utilisateur, le dispositif d'utilisateur (170) obtient les identifiants de talkgroups respectifs (32, 46, 52) en transmettant les messages respectifs pour essayer de joindre chaque élément d'une pluralité de talkgroups pouvant être arrangés (430) ; et en tenant à jour un enregistrement des talkgroups dont la jonction a réussi (450) ; et
le dispositif d'utilisateur (170) ci-décrit met les identifiants de talkgroups configurés (32, 46, 52) respectifs à la disposition (240, 330) de son utilisateur.
